# EUROPEAN PATENT APPLICATION

(11) **EP 4 726 827 A1**
(43) Date of publication of application: **15.04.2026**
(21) Application number: 25206002.5
(22) Date of filing: 01.10.2025
(51) Int. Cl.: H01M 10/04, H01M 50/103, H01M 50/105, H01M 50/258, H01M 50/264, H01M 50/119, H01M 50/15, H01M 50/159, H01M 50/169, H01M 50/202, H01M 50/244, H01M 50/247, H01M 50/249, H01M 50/627, H01M 10/058

(54) **SECONDARY BATTERY AND METHOD FOR MANUFACTURING THE SAME**

(30) Priority: 10.10.2024 KR 20240137678
(71) Applicant: SAMSUNG SDI CO., LTD., Yongin-si, Gyeonggi-do 17084 (KR)
(72) Inventor: KO, Kyungsuk, Yongin-si, Gyeonggi-do 17084 (KR)
(74) Representative: Bardehle Pagenberg Partnerschaft mbB Patentanwälte Rechtsanwälte

(57) **Abstract**

A secondary battery includes: an electrode assembly including a first electrode including a first electrode tab, and a second electrode including a second electrode tab; a case including a three-dimensional shaped body having an accommodating space therein to accommodate the electrode assembly, and a flange extending in a horizontal direction from an open end of the body around the accommodating space; a cover on the case and joined to the flange to seal the accommodating space; and a first side plate joined to the body.

## Description

### BACKGROUND

### 1 Field

Aspects of embodiments of the present disclosure relate to a secondary battery, and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be coupled to an external device using an adhesive member such as tape. Accordingly, the secondary battery may not be easily removable, and the space occupied by the adhesive member may limit the height of the secondary battery.

The above information disclosed in this Background section is for enhancement of understanding of the background of the present disclosure, and therefore, it may contain information that does not constitute related (or prior) art.

### SUMMARY

According to the present invention, a secondary battery and a method for manufacturing a secondary battery as claimed in claims 1 and 15 are provided. Preferred embodiments of the invention are described in the dependent claims. Embodiments of the present disclosure may be directed to a secondary battery that may be more easily attachable to and detachable from an external device, and has a battery capacity or a mounting space, and a method for manufacturing the secondary battery.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

According to one or more embodiments of the present disclosure, a secondary battery includes: an electrode assembly including a first electrode including a first electrode tab, and a second electrode including a second electrode tab; a case including a three-dimensional shaped body having an accommodating space therein to accommodate the electrode assembly, and a flange extending in a horizontal direction from an open end of the body around the accommodating space; a cover on the case and joined to the flange to seal the accommodating space; and a first side plate joined to the body.

In an embodiment, a thickness of the first side plate may be thicker than a thickness of the case.

In an embodiment, the first side plate may include at least one of nickel or a nickel alloy.

In an embodiment, the first side plate may include: a curved portion; and flat portions extending from opposite sides of the curved portion. The curved portion may be joined to the body by covering a connecting portion of the body.

In an embodiment, at least one of the flat portions may include at least one weld portion.

In an embodiment, the secondary battery may further include a first screw fixing structure joined to the first side plate.

In an embodiment, the first screw fixing structure may include: a first fixing portion having a first through-hole penetrating a central portion thereof, and configured to be fixed to an external device by a fixing member extending through the first through-hole; and a first bottom portion extending from the first fixing portion, and joined to the first side plate.

In an embodiment, a thickness of the first fixing portion may be thicker than a thickness of the first side plate, and a thickness of the first bottom portion may be the same as the thickness of the first side plate.

In an embodiment, the secondary battery may further include a second side plate joined to the body, and a second screw fixing structure joined to the second side plate. The second screw fixing structure may include: a second fixing portion having a second through-hole penetrating a central portion thereof, and configured to be coupled to the external device by a fixing member extending through the second through-hole; and a second bottom portion extending from the second fixing portion, and joined to the second side plate.

In an embodiment, the first fixing portion and the second fixing portion may be spaced from a top portion of the case by different distances from each other, and may be located on the body.

In an embodiment, the first side plate and the first screw fixing structure may be integral with each other.

In an embodiment, the case and the cover may include a same metallic material as each other.

In an embodiment, the metallic material may include stainless use steel (SUS).

In an embodiment, the case may further include: a first electrode terminal on a first surface of the body, and electrically connected to the first electrode tab; and a second electrode terminal on the first surface of the body, and electrically connected to the second electrode tab.

According to one or more embodiments of the present disclosure, a method for manufacturing a secondary battery, includes: joining a side plate to a body of a case, the case including the body having a three-dimensional shape to define an accommodating space therein, and a flange extending in a horizontal direction from an open end of the body around the accommodating space; placing an electrode assembly including a first electrode including a first electrode tab and a second electrode including a second electrode tab in the accommodating space by joining the electrode assembly to the case; joining a cover on the flange of the case to enclose the accommodating space; and cutting the flange.

In an embodiment, the method may further include joining a screw fixing structure to the side plate.

In an embodiment, the joining of the side plate to the body of the case may include laser welding the body and the side plate to each other.

In an embodiment, the joining of the side plate to the body of the case may include welding the body and the side plate to each other from an inner side of the body.

In an embodiment, the case and the cover may include a same metallic material as each other.

In an embodiment, the metallic material may include stainless use steel (SUS).

According to some embodiments of the present disclosure, a secondary battery that may be more easily attachable to and detachable from an external device may be provided, and a method for manufacturing the secondary battery may be provided.

According to some embodiments of the present disclosure, because the secondary battery may be coupled to an external device without using a separate adhesive member, the capacity or the mounting space of the battery may be increased by the space that would have been occupied by the adhesive member.

According to some embodiments of the present disclosure, screw fixing structures may be spaced apart from a top portion of a case by different distances, so that a reverse insertion of the secondary battery may be prevented or substantially prevented.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a secondary battery according to some embodiments of the present disclosure.
FIG. 2 illustrates a secondary battery according to some embodiments of the present disclosure.
FIG. 3 illustrates side plates according to some embodiments of the present disclosure.
FIG. 4 illustrates a secondary battery according to some embodiments of the present disclosure.
FIG. 5 illustrates screw fixing structures according to some embodiments of the present disclosure.
FIG. 6 illustrates a secondary battery coupled to an external device according to some embodiments of the present disclosure.
FIGS. 7-14 illustrate various views of a method of manufacturing a secondary battery according to some embodiments of the present disclosure.
FIG. 15 illustrates a flowchart showing a method of fabricating a secondary battery according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the drawings, the sizes and relative sizes of layers and regions may be exaggerated for clarity of illustration. In other words the sizes in the drawings are shown for convenience of illustration and are not intended to be limiting. In addition, throughout the specification, like reference numerals are used to refer to like components.

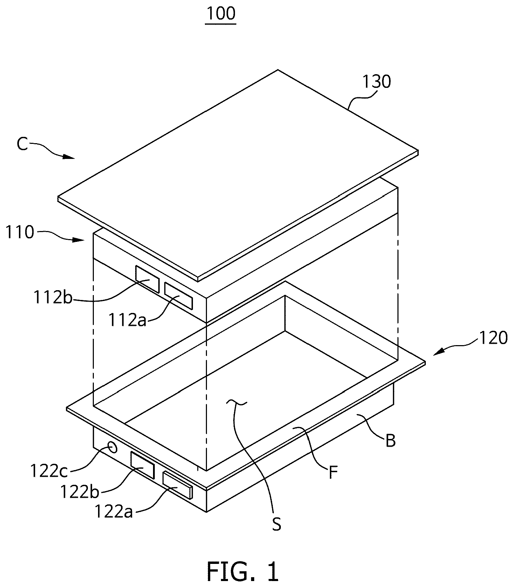

FIG. 1 illustrates a secondary battery 100 according to some embodiments of the present disclosure.

Referring to FIG. 1, the secondary battery 100 according to some embodiments of the present disclosure may include an electrode assembly 110, a three-dimensional shape body B, and a case 120. The electrode assembly 110 may include a first electrode having a first electrode tab 112a, and a second electrode having a second electrode tab 112b. The body B may have defined therein an accommodating space S to accommodate the electrode assembly 110. The case 120 may include a flange F extending in a horizontal direction to enclose the accommodating space S from an open end of the body B. In addition, the secondary battery 100 may include a cover 130 disposed over the case 120, and engaged with the flange F to seal the accommodating space S. For example, the electrode assembly 110 may be bent or stacked with a separator, which is an insulator, provided between the first electrode corresponding to a positive electrode and the second electrode corresponding to a negative electrode. The secondary battery 100 shown in FIG. 1 may be a stainless use steel (SUS) can type secondary battery, but the present disclosure is not limited thereto, and the secondary battery may be any suitable kind of secondary battery.

Each of the positive electrode and the negative electrode may include a coated portion and an uncoated portion. The coated portion is a region where an active material is applied to a current collector formed from a thin sheet of a metal foil, and the uncoated portion is a region where the active material is not coated. The positive electrode and the negative electrode may be wound after a separator, which is an insulator, is provided therebetween. However, the present disclosure is not limited thereto, and the electrode assembly may have a structure in which a plurality of sheets of positive electrodes and negative electrodes are alternately stacked with a separator provided therebetween.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The electrode assembly 110 may include the first electrode tab 112a connected to a first side of the first electrode, and the second electrode tab 112b connected to a first side of the second electrode. The first electrode tab 112a and the second electrode tab 112b may be connected to the first and second electrodes by welding tabs to the uncoated portions of the first and second electrodes, respectively, and may be formed by blanking the uncoated portions of the first and second electrodes. In a wound state, the first electrode tab 112a and the second electrode tab 112b may be disposed side by side with each other by a suitable spacing (e.g., a predetermined spacing). The first electrode may be a positive electrode and the second electrode may be a negative electrode, or vice versa. However, the present disclosure is not limited thereto, and the electrode assembly 110 may be any suitable structure including electrode tabs.

The case 120 forms the overall contour of the secondary battery 100, and may be formed of a conductive metal, such as aluminum, an aluminum alloy, or a nickel-plated steel. According to an embodiment, the case 120 may include a metallic material, such as stainless use steel (SUS), aluminum (Al), or the like. However, the present disclosure is not limited thereto, and the case may be formed of a variety of suitable metallic materials that satisfy the strength and the resistance to external impacts that may be desired for the secondary battery 100. In addition, the case 120 may include the body B having the accommodating space S to accommodate the electrode assembly 110, and the flange F extending in a horizontal direction from an open end of the body B to enclose the accommodating space S. In other words, in a plan view, the flange F may surround (e.g., around a periphery of) the accommodating space S of the body B. In the body B, the accommodating space S in which the electrode assembly 110 is accommodated may be formed, for example, by press machining. The accommodating space S of the case 120 may be formed, for example, in a rectangular shape. The flange F may be formed to extend from the open end of the body B in the horizontal direction of the body B in a direction parallel to the four corners of the rectangular shape to enclose the accommodating space S.

According to an embodiment, the secondary battery 100 may include the cover 130 disposed over the case 120 and engaged with the flange F to seal the accommodating space S. The cover 130 may include a flat or substantially flat plate disposed over the case 120 to seal the accommodating space S. For example, the cover 130 may be implemented as a flat or substantially flat plate that is sized to cover the body B and the flange F, so as to be in surface contact with the flange F. In other words, the bottom surface of the cover 130 and the top surface of the flange F may be arranged to be in surface contact with each other. By bonding the flange F and the cover 130 to each other, the body B and the cover 130 may form a unitary bonded structure. According to an embodiment, the body B may be joined to the cover 130 by laser welding. However, the present disclosure is not limited thereto, and various suitable joining methods may be used to seal the case 120. For example, the flange F of the cover 130 and the body B may be joined to each other by not only the laser welding, but also by ultrasonic welding, brazing, laser brazing, welding, soldering, or the like.

According to an embodiment, the cover 130 may be formed of the same metallic material as that of the body B. In other words, like the metallic material of the body B, the cover 130 may be formed of stainless use steel (SUS), aluminum (Al), or the like.

A first electrode terminal 122a electrically connected to the first electrode 112a of the electrode assembly 110 and a second electrode terminal 122b electrically connected to the second electrode 112b of the electrode assembly 110 may be joined to the body B. For example, the first and second electrode terminals 122a and 122b may be disposed on at least a first surface of the case. However, the positions of the first and second electrode terminals 122a and 122b according to some embodiments of the present disclosure are not limited to the positions illustrated in FIG. 1, and may be variously modified as needed or desired.

In an embodiment, the case 120 may include an electrolyte inlet 122c. For example, the electrolyte inlet 122c may be an aperture provided in at least a first surface of the case 120, and may be provided for injecting an electrolyte into the case 120 after the body B and the cover 130 are joined to each other and sealed. The electrolyte inlet 122c may be sealed with a sealing member after the electrolyte is injected.

The secondary battery 100 may be a lithium battery cell, a sodium battery cell, or the like. However, the present disclosure is not limited thereto, and the secondary battery 100 may include any suitable kind of battery capable of repeatedly providing electricity by charging and discharging. In an embodiment, in a case where the secondary battery 100 is a lithium battery cell, the secondary battery may be used in an electric vehicle (EV) due to having excellent life characteristics and high rate characteristics. For example, the secondary battery may be used in a hybrid vehicle such as a plug-in hybrid electric vehicle (PHEV). In addition, lithium battery cells may be used in various applications requiring or desiring large amounts of power storage, for example, such as electric bicycles, power tools, and the like, but the present disclosure is not limited thereto.

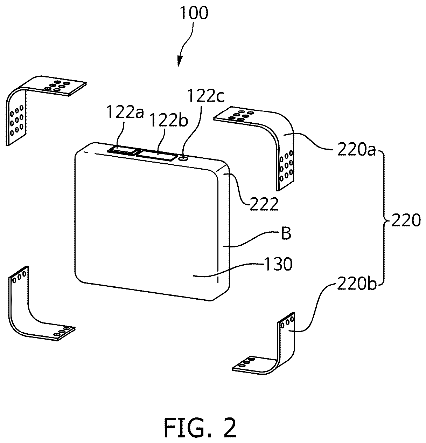

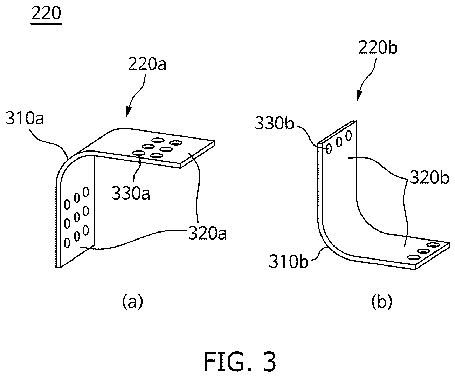

FIG. 2 illustrates a secondary battery 100 according to some embodiments of the present disclosure. FIG. 3 illustrates side plates according to some embodiments of the present disclosure.

Referring to FIGS. 2 and 3, the secondary battery 100 may include at least one side plate 220 joined to the body B. For example, the side plates 220 may include a first side plate 220a and a second side plate 220b. The first side plate 220a may be joined to a surface on which the first electrode terminal 122a, the second electrode terminal 122b, and the electrolyte inlet 122c are disposed, and the second side plate 220b may be joined to a surface opposite the surface on which the first electrode terminal 122a, the second electrode terminal 122b, and the electrolyte inlet 122c are disposed. The first side plate 220a and the second side plate 220b may be welded from an inner side of the body B to be joined to the body B.

In an embodiment, each of the first side plate 220a and the second side plate 220b may include a curved portion 310a or 310b, and flat portions 320a or 320b extending from opposite sides of the curved portion 310a or 310b. For example, the curved portions 310a and 310b may have a convex curved shape. Each of the flat portions 320a and 320b may include at least one weld portion 330a and 330b. In an embodiment, the number of welds 330a on the first side plate 220a and the number of welds 330b on the second side plate 220b may be different from each other. For example, the number of welds 330a on the first side plate 220a and the number of welds 330b on the second side plate 220b may range from six to nine. The area occupied by the at least one weld 330 may be within 15% of the total area of the first side plate 220a and the second side plate 220b. In another example, the number of welds 330a on the first side plate 220a and the number of welds 330b on the second side plate 220b may be the same as each other.

In an embodiment, the curved portion 310a of the first side plate 220a and the curved portion 310b of the second side plate 220b may be joined to the body B, while covering a connecting portion 222 of the body B. In this case, the shape of the curved portion may correspond to the shape of the connecting portion. For example, the body B may have a rectangular shape, and the connecting portion 222 may have a convex curved shape connecting adjacent surfaces of the body B at four edges of the body B. In another example, the connecting portions 222 may have a rectangular shape connecting adjacent surfaces of the body B. In this case, the curved portions 310a and 310b may have a rectangular shape corresponding to the shape of the connecting portions 222.

In an embodiment, the thickness of the first side plate 220a may be thicker than the thickness of the case 120. In more detail, the thickness of the first side plate 220a may be thicker than the thickness of the body B. For example, the thickness of the body B may be about 0.1 mm, and the thickness of the first side plate 220a may be about 0.2 mm. In an embodiment, the first side plate 220a may include at least one of nickel or a nickel alloy.

In some embodiments of the present disclosure, joining the side plates 220 to the body B may allow separate structures to be joined to the side plates 220, for example, such as by welding. Accordingly, a durability or a stability during welding may be achieved.

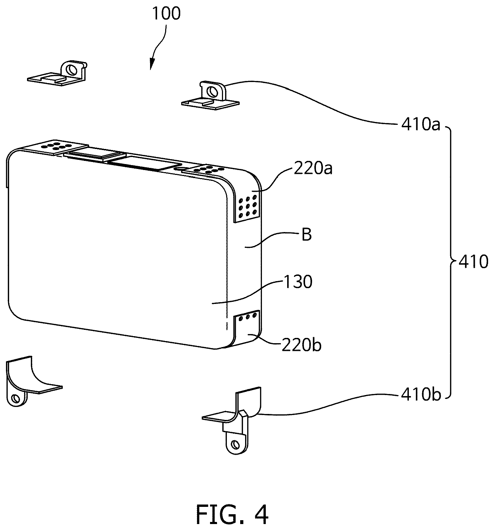

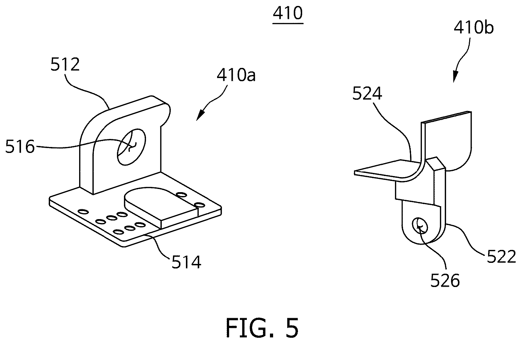

FIG. 4 illustrates a secondary battery 100 according to some embodiments of the present disclosure. FIG. 5 illustrates screw fixing structures 410 according to some embodiments of the present disclosure.

Referring to FIGS. 4 and 5, the secondary battery 100 may include the screw fixing structures 410. The screw fixing structures 410 may include a first screw fixing structure 410a joined to the first side plate 220a, and a second screw fixing structure 410b joined to the second side plate 220b. The first screw fixing structure 410a may be welded to the first side plate 220a. In an embodiment, the first screw fixing structure 410a and the first side plate 220a may be joined to each other by welding the first side plate 220a to the first screw fixing structure 410a from an outer side of the first side plate 220a. For example, the first screw fixing structure 410a and the first side plate 220a may be welded together, such as by laser welding. The second screw fixing structure 410b may be welded to the second side plate 220b. In an embodiment, the second screw fixing structure 410b and the second side plate 220b may be joined to each other by welding the second screw fixing structure 410b and the second side plate 220b together from an outer side of the second side plate 220b. For example, the second screw fixing structure 410b and the second side plate 220b may be welded together by laser welding or the like. The first side plate 220a and the first screw fixing structure 410a may be provided integrally with each other. Likewise, the second side plate 220b and the second screw fixing structure 410b may be provided integrally with each other.

In an embodiment, the first screw fixing structure 410a may include a first through-hole 516 extending through a center portion thereof, a first fixing portion 512 that may be fixed to an external device using a fixing member extending through the first through-hole 516, and a first bottom portion 514 extending from the first fixing portion 512 and joined to the first side plate 220a. The thickness of the first fixture 512 may be thicker than the thickness of the first side plate 220a. For example, the thickness of the first fixture 512 may be 0.6 mm. The thickness of the first bottom portion 514 may be the same or substantially the same as the thickness of the first side plate 220a. For example, the thickness of the first bottom portion 514 and the thickness of the first side plate 220a may both be 0.2 mm. The fixing member extending through the first through-hole 516 may be, for example, a screw thread.

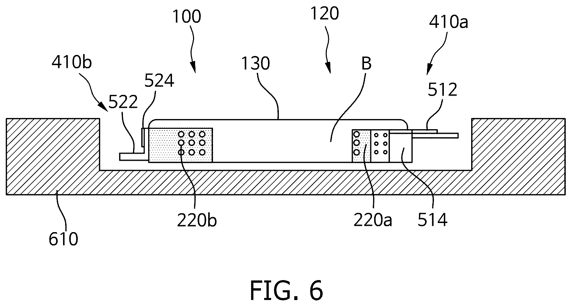

In an embodiment, the second screw fixing structure 410b may include a second through-hole 526 through a center portion thereof, a second fixing portion 522 that may be coupled to an external device using a fixing member extending through the second through-hole 526, and a second bottom portion 524 extending from the second fixing portion 522 and joined to the second side plate 220b. The thickness of the second fixture 522 may be thicker than the thickness of the second side plate 220b. For example, the thickness of the second fixture 522 may be 0.6 mm. The thickness of the second bottom portion 524 may be the same or substantially the same as the thickness of the second side plate 220b. For example, the thickness of the second bottom portion 524 and the thickness of the second side plate 220b may both be 0.2 mm. The fixing member extending through the second through-hole 526 may be, for example, a screw thread. The external device may be an electronic device, for example, such as an electric vehicle, an electric bicycle, or the like, but the present disclosure is not limited thereto. An embodiment in which the secondary battery 100 is connected to an external device will be described in more detail below with reference to FIG. 6.

In an embodiment, the first screw fixing structure 410a and the second screw fixing structure 410b may have different shapes from each other. For example, the first fixing portion 512 of the first screw fixing structure 410a may have a rectangular shape having four rounded edges, and the first bottom portion 514 may have a rectangular flat plate shape extending parallel to or substantially parallel to a central axis direction of the through-hole 516 and including a plurality of weld portions. In other words, the first bottom portion 514 may extend perpendicular to or substantially perpendicular to the first fixing portion 512. The second fixing portion 522 of the second screw fixing structure 410b may have a circular shape, and the second bottom portion 524 may have a shape corresponding to the curved portion 310b of the second side plate 220b. However, the present disclosure is not limited thereto, and the shape of the first screw fixing structure 410a and the shape of the second screw fixing structure 410b may be interchangeable with each other.

Moreover, the shape of the first screw fixing structure 410a and the shape of the second screw fixing structure 410b are not limited to those described above, and may have various suitable shapes depending on the shape and the size of the secondary battery 100. According to an embodiment, the first screw fixing structure 410a and the second screw fixing structure 410b may be formed of the same metallic material as that of the body B. For example, like the metallic material of the body B, the first screw fixing structure 410a and the second screw fixing structure 410b may include stainless use steel (SUS) or aluminum (Al).

FIG. 6 illustrates a secondary battery 100 coupled to an external device 610 according to some embodiments of the present disclosure. Hereinafter with reference to FIG. 6, redundant description of the same or substantially the same components as those described above with reference to FIGS. 1 to 5 may not be repeated.

Referring to FIG. 6, the secondary battery 100 may be detachably coupled to any suitable external device 610 using the first screw fixing structure 410a, and a fixing member extending through the second screw fixing structure 410b. The fixing member may include, for example, a screw thread or the like. The external device 610 may be any suitable device that may be provided with a secondary battery. For example, the external device 610 may include an electric vehicle, a plug-in hybrid vehicle, an electric bicycle, a power tool, or the like, but the present disclosure is not limited thereto.

In an embodiment, the first fixing portion 512 of the first screw fixing structure 410a and the second fixing portion 522 of the second screw fixing structure 410b may each be spaced apart by different distances from each other from the top of the case 120, and may be disposed on the body B. The top of the case 120 may refer to a portion (e.g., the open portion of the case 120) where the cover 130 is joined to the case 120. For example, the first fixture 512 may be disposed on the body B at a closer distance to the cover 130 than the distance of the second fixture 522 to the cover 130. However, the positions where the first screw fixing structure 410 and the second screw fixing structure 522 are disposed are not limited thereto, and the first screw fixing structure 410 and the second screw fixing structure 522 may have various suitable arrangements. By directly coupling the secondary battery 100 and the external device 610 to each other using the first screw fixing structure 410a and the second screw fixing structure 410b, a secondary battery that may be more easily attachable to and detachable from the external device may be provided. Because the secondary battery 100 may be coupled to the external device 610 without using a separate adhesive member, the capacity or the mounting space of the battery may be increased by the space that would have been occupied by the adhesive member. In addition, by disposing the first fixing portion 512 and the second fixing portion 522 on the body B so as to be spaced apart from the top portion of the case 120 by different distances from each other, a reverse insertion of the secondary battery 100 may be prevented or substantially prevented.

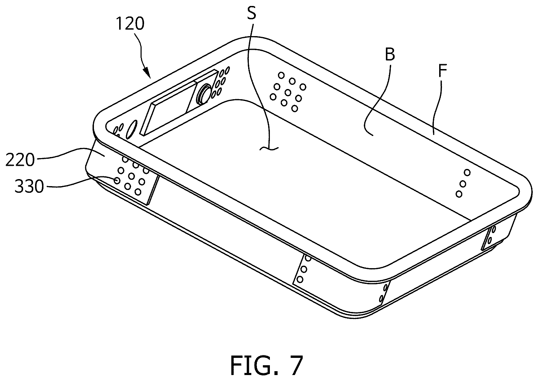

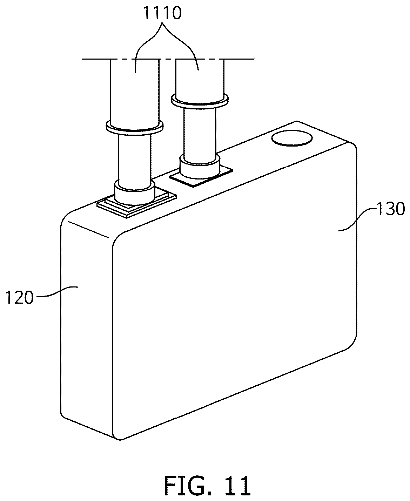

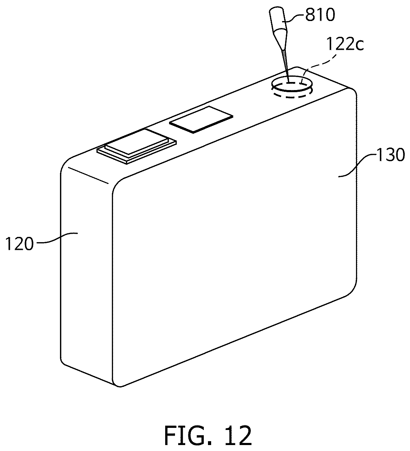

FIGS. 7 through 14 illustrate various views of a method of manufacturing a secondary battery 100 according to some embodiments of the present disclosure. Hereinafter with reference to FIGS. 7 to 14, redundant description of the same or substantially the same components as those described above with reference to FIGS. 1 to 6 may not be repeated.

Referring to FIG. 7, side plates 220 may be joined to a body B of a case 120. The body B may have a three-dimensional shape having an accommodating space S. A flange F of the case 120 may extend in a horizontal direction from an open end of the body B to enclose the accommodating space S. The side plate 220 may be joined to the body B by welding the body B and the side plate 220 together from an inner side of the body B. In an embodiment, the side plate 220 may be joined to the body B by welding the side plate 220 to the body B from an inner side of the body B. For example, the side plate 220 may be joined to the body B by laser welding the body B and the side plate 220 together along at least one weld portion 330 formed on the side plate 220.

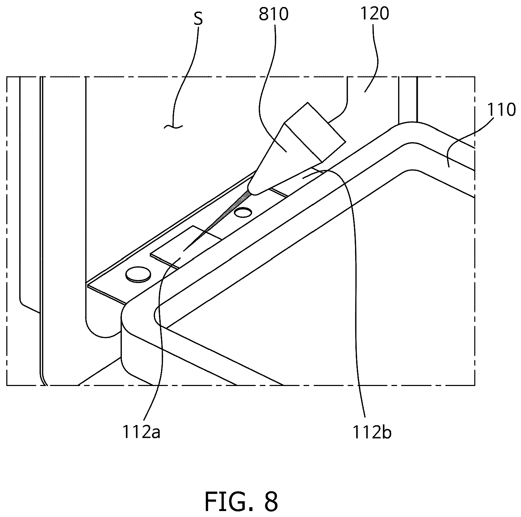

Referring to FIG. 8, an electrode assembly 110 including a first electrode having a first electrode tab 112a and a second electrode having a second electrode tab 112b may be accommodated in the accommodating space S by joining the electrode assembly 110 to the case 120. In an embodiment, the first electrode tab 112a and the second electrode tab 112b may be joined to the first electrode terminal and the second electrode terminal of the case 120, respectively, using a welder 810. For example, the first electrode tab 112a and the second electrode tab 112b may be joined to the first electrode terminal and the second electrode terminal of the case 120 by laser welding or the like.

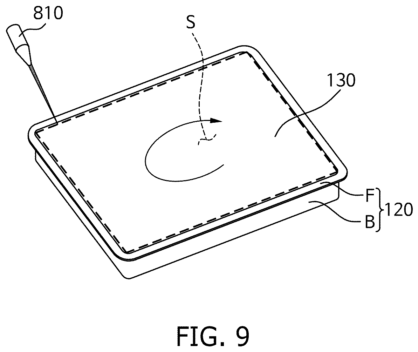

Referring to FIG. 9, a cover 130 disposed over the case 120 to seal the accommodating space S may be joined to the flange F. For example, the cover 130 may be joined to the flange F using a welder 810. The cover 130 and the flange F may be joined to each other by laser welding or the like. In an embodiment, the welding may proceed in a clockwise direction along a periphery of the flange F as shown by a dashed line in FIG. 9, but the present disclosure is not limited thereto.

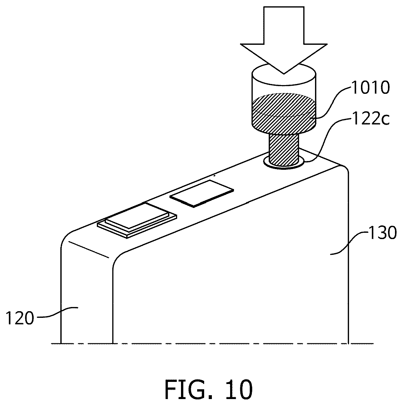

Referring to FIGS. 10 to 12, an electrolyte 1010 may be injected through an electrolyte inlet 122c disposed on a first surface of the case 120. Thereafter, precharging may be performed by connecting a pre-charger 1110 to the first electrode terminal 122a and the second electrode terminal 122b disposed on the first surface of the case 120. Subsequently, the electrolyte inlet 122c may be welded using the welder 810. For example, the electrolyte inlet 122c may be welded by laser welding or the like.

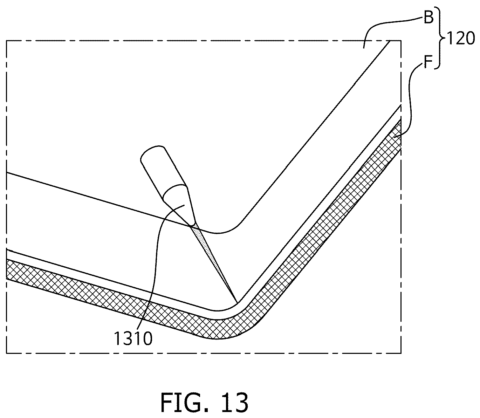

Referring to FIG. 13, the flange F of the case 120 may be cut. In an embodiment, the flange F may be cut using a cutter 1310. The cutter 1310 may be, for example, a laser cutter. The flange F may be cut by an area extending from the body B of the case 120.

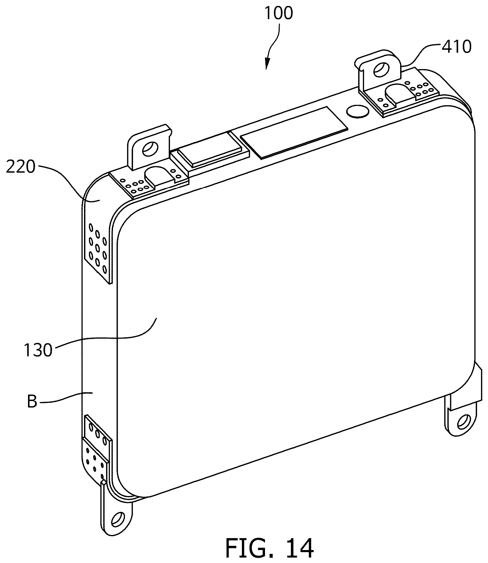

Referring to FIG. 14, screw fixing structures 410 may be joined to the side plates 220. In an embodiment, the screw fixing structures 410 may be joined to the side plates 220 by welding the screw fixing structures 410 to the side plates 220 from an outer side of the side plates 220. For example, the side plates 220 and the screw fixing structures 410 may be welded together by laser welding or the like.

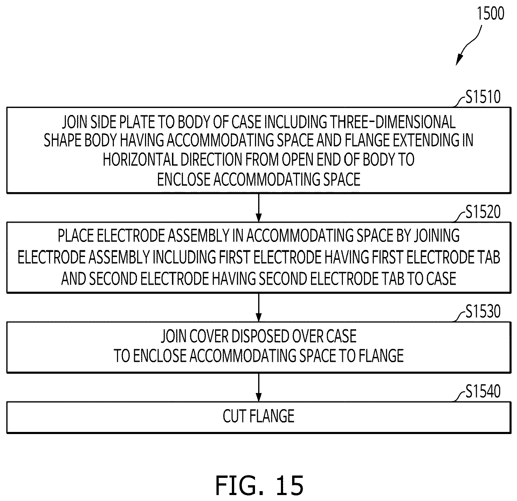

FIG. 15 illustrates a flowchart showing a method 1500 of fabricating a secondary battery 100 according to some embodiments of the present disclosure.

Referring to FIG. 15, a side plate may be joined to a body of a case including the three-dimensional shape body having an accommodating space and a flange extending in a horizontal direction from an open end of the body to enclose the accommodating space (S1510). An electrode assembly including a first electrode having a first electrode tab and a second electrode having a second electrode tab may be accommodated in the accommodating space by joining the electrode assembly to the case (S1520). A cover disposed over the case to enclose the accommodating space may be joined to the flange (S1530), and the flange may be cut (S1540). In some embodiments, the case and the cover may include the same metallic material as each other. For example, the metallic material may include stainless use steel (SUS) or the like.

Thereafter, the fixing structures may be joined to the side plate. For example, the side plate may be joined to the body by laser welding the body and the side plate together. In another example, the side plate may be joined to the body by welding the body and the side plate together from an inner side of the body.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. A secondary battery (100) comprising:
an electrode assembly (110) comprising a first electrode comprising a first electrode tab (112a), and a second electrode comprising a second electrode tab (112b);
a case (120) comprising a three-dimensional shaped body (B) having an accommodating space (S) therein to accommodate the electrode assembly (110), and a flange (F) extending in a horizontal direction from an open end of the body (B) around the accommodating space (S);
a cover (130) on the case (120) and joined to the flange (F) to seal the accommodating space (S); and
a first side plate (220a) joined to the body (B).

2. The secondary battery (100) as claimed in claim 1, wherein a thickness of the first side plate (220a) is thicker than a thickness of the case (120).

3. The secondary battery (100) as claimed in claim 1 or claim 2, wherein the first side plate (220a) comprises at least one of nickel or a nickel alloy.

4. The secondary battery (100) according to any one of the preceding claims, wherein the first side plate (220a) comprises:
a curved portion (310a); and
flat portions (320a) extending from opposite sides of the curved portion (310a),
and
wherein the curved portion (310a) is joined to the body (B) by covering a connecting portion (222) of the body (B).

5. The secondary battery (100 as claimed in claim 4, wherein at least one of the flat portions (320a) comprises at least one weld portion (330a).

6. The secondary battery (100) according to any one of the preceding claims, further comprising a first screw fixing structure (410a) joined to the first side plate (220a).

7. The secondary battery (100) as claimed in claim 6, wherein the first screw fixing structure (410a) comprises:
a first fixing portion (512) having a first through-hole (516) penetrating a central portion thereof, and configured to be fixed to an external device (610) by a fixing member extending through the first through-hole (516); and
a first bottom portion (514) extending from the first fixing portion (512), and joined to the first side plate (220a).

8. The secondary battery (100) as claimed in claim 7, wherein a thickness of the first fixing portion (512) is thicker than a thickness of the first side plate (220a), and a thickness of the first bottom portion (514) is the same as the thickness of the first side plate (220a).

9. The secondary battery (100) according to any one of the preceding claims 7 or 8, further comprising a second side plate (220b) joined to the body B, and a second screw fixing structure (410b) joined to the second side plate (220b),
wherein the second screw fixing structure (410b) comprises:
a second fixing portion (522) having a second through-hole (526) penetrating a central portion thereof, and configured to be coupled to the external device (610) by a fixing member extending through the second through-hole (526); and
a second bottom portion (524) extending from the second fixing portion (522), and joined to the second side plate (220b).

10. The secondary battery (100) as claimed in claim 9, wherein the first fixing portion (512) and the second fixing portion (522) are spaced from a top portion of the case (120) by different distances from each other, and are located on the body (B).

11. The secondary battery (100) according to any one of the preceding claims when combined with claim 6, wherein the first side plate (220a) and the first screw fixing structure (410a) are integral with each other.

12. The secondary battery (100) according to any one of the preceding claims, wherein the case (120) and the cover (130) comprise a same metallic material as each other.

13. The secondary battery (100) as claimed in claim 12, wherein the metallic material comprises stainless use steel (SUS).

14. The secondary battery (100) according to any one of the preceding claims, wherein the case (120) further comprises:
a first electrode terminal (122a) on a first surface of the body (B), and electrically connected to the first electrode tab (112a); and
a second electrode terminal (122b) on the first surface of the body (B), and electrically connected to the second electrode tab (112b).

15. A method for manufacturing a secondary battery (100), the method comprising:
joining a side plate (220) to a body B of a case (120), the case (120) comprising the body (B) having a three-dimensional shape to define an accommodating space (S) therein, and a flange (F) extending in a horizontal direction from an open end of the body (B) around the accommodating space (S);
placing an electrode assembly (110) comprising a first electrode comprising a first electrode tab (112a) and a second electrode comprising a second electrode tab (112b) in the accommodating space (S) by joining the electrode assembly (110) to the case (120);
joining a cover (130) on the flange (F) of the case (120) to enclose the accommodating space (S); and
cutting the flange (F).
